# EUROPEAN PATENT APPLICATION

(11) **EP 3 683 115 A1**
(43) Date of publication of application: **22.07.2020**
(21) Application number: 20151557.4
(22) Date of filing: 14.01.2020
(51) Int. Cl.: B60W 60/00, G01C 21/26

(54) **VEHICLE DRIVING ASSISTANCE SYSTEM AND VEHICLE DRIVING ASSISTANCE METHOD**

(30) Priority: 17.01.2019 JP 2019005723
(71) Applicant: Mazda Motor Corporation, Hiroshima 730-8670 (JP)
(72) Inventor: TAKAHASHI, Hideki, Fuchu-cho, Aki-gun,, Hiroshima 730-8670 (JP)
(74) Representative: Müller-Boré & Partner Patentanwälte PartG mbB

(57) **Abstract**

In a vehicle driving assistance system 100, an ECU 10 sets plural travel route candidates RC on the basis of travel road information acquired from a camera 21 and the like, calculates the route evaluation parameter value for each of the plural travel route candidates RC, and sets a target travel route from the plural travel route candidates on the basis of the route evaluation parameter value. In particular, the ECU 10 configured to calculate target lateral acceleration LA1 that should be generated by a vehicle according to curvature (1/R) of a travel road 5 and, in the case where the lateral acceleration that is generated at the time when a vehicle 1 travels on the travel route candidate RC is target lateral acceleration LA1, set the route evaluation parameter value to be lower than that in the case where the lateral acceleration is not the target lateral acceleration LA1.

## Description

### [Technical Field]

The present invention relates to a vehicle driving assistance system and a vehicle driving assistance method for setting a travel route for a vehicle and assisting with driving on the basis of this travel route.

### [Background Art]

Conventionally, as travel route generation algorithms for a vehicle, a potential method, a spline interpolation function, an A-star (A*) method, Dijkstra's algorithm, RRT, a state lattice method, and the like are used.

In the A-star method and the Dijkstra's algorithm, grids that are partitioned vertically and horizontally are each set as a node, and the nodes are expanded in a manner to minimize cost (route cost). In this way, a route is searched. For example, in JP-A-2011-128758, a route search system that selects a route with the minimum cost among routes from a start point to an end point included in an area represented by the grids is disclosed. In the route search system, the node with the minimum cost is expanded, more specifically, the number of expanding directions from the node with the minimum cost is set according to a moving direction, and the moving direction for the expanded node with the minimum cost is determined.

In the state lattice method, a grid area including a large number of grid points is set in a travel road, these grid points are sequentially connected to set a large number of travel route candidates, and one travel route is selected from these travel route candidates. For example, in WO 2013/051081, a vehicle driving assistance system is disclosed. In the vehicle driving assistance system, the plural travel routes are set on a grid map, movement cost indicative of a degree of danger in the case where a host vehicle travels is set for each cell of the grid map, and one of the travel routes is selected on the basis of this movement cost.

### [Summary of the Invention]

### [Problem to be solved by the invention]

It is a problem for a vehicle to maintain a desired position when travelling on a travel road.

### [Means for solving the Problem]

The present invention has been made to solve the above-described problem, and therefore has a purpose of providing a vehicle driving assistance system and a vehicle driving assistance method capable of aiding a vehicle in travelling at a desired position on a travel road. Specifically, a route evaluation parameter is appropriately defined such that lateral acceleration corresponding to curvature of a travel road is generated.

In particular, it is not desired to set a travel route only from a perspective of reducing the lateral acceleration generated on the vehicle. This is because, when the travel route is set with a reduction of the lateral acceleration being a top priority, it is difficult to appropriately maintain a position in the travel road where the vehicle should travel (for example, a center position of a host vehicle lane). That is, in order to make the vehicle travel at such a desired position in the travel road, it is desired to generate a certain magnitude of the lateral acceleration, which corresponds to curvature of the travel road, from the vehicle.

The achievement of the object in accordance with the invention is set out in the independent claims. Further developments of the invention are the subject matter of the dependent claims.

In order to achieve the above purpose, the present invention is a vehicle driving assistance system including: a travel road information acquisition device that acquires travel road information on a travel road of a vehicle; and a controller configured to set a target travel route for the vehicle in the travel road on the basis of the travel road information and to execute driving control of the vehicle such that the vehicle travels along the target travel route. The controller is configured to: set plural travel route candidates as candidates for setting the target travel route on the basis of the travel road information; calculate a route evaluation parameter value for each of the plural travel route candidates; and select one travel route of the plural travel route candidates as the target travel route on the basis of the route evaluation parameter value. The controller is further configured to: calculate target lateral acceleration that should be generated by the vehicle according to curvature of the travel road; and set the route evaluation parameter value to be lower in the case where lateral acceleration that is generated at the time when the vehicle travels on the travel route candidate is the target lateral acceleration than in the case where the lateral acceleration is not the target lateral acceleration.

In the present invention that is configured as described above, the controller calculates the target lateral acceleration that should be generated by the vehicle according to the curvature of the travel road, and sets the route evaluation parameter value to be lower in the case where the lateral acceleration, which is generated at the time when the vehicle travels on the travel route candidate, is the target lateral acceleration than in the case where the lateral acceleration is not the target lateral acceleration. According to such present invention, the route evaluation parameter value is set to a minimum value at the target lateral acceleration. Thus, it is possible to appropriately set such a travel route that the target lateral acceleration corresponding to the curvature of the travel road is generated at the time when the vehicle travels on the travel road.

In the present invention, the controller is preferably configured to set the route evaluation parameter value to a value that is increased as a difference between the lateral acceleration and the target lateral acceleration is increased in the case where the lateral acceleration, which is generated at the time when the vehicle travels on the travel route candidate, is not the target lateral acceleration.

According to the present invention that is configured just as described, the route evaluation parameter value is increased as the lateral acceleration, which is generated at the time when the vehicle travels on the travel route candidate, deviates from the target lateral acceleration. Thus, it is possible to further effectively set such a travel route that the target lateral acceleration is generated.

In the present invention, the controller is preferably configured to calculate lateral acceleration, which is generated at the time when the vehicle travels at a target position in the travel road, as the target lateral acceleration on the basis of the curvature of the travel road.

According to the present invention that is configured just as described, the lateral acceleration, which is generated at the time when the vehicle travels at the target position in the travel road, is calculated as the target lateral acceleration. Thus, by using the route evaluation parameter that is defined according to this target lateral acceleration, it is possible to appropriately set such a travel route that the vehicle passes the target position.

In the present invention, the controller is preferably configured to set the target position at a center line of a host vehicle lane, in which the vehicle travels, in the travel road.

According to the present invention that is configured just as described, it is possible to appropriately set such a travel route that the vehicle travels on the center line of the host vehicle lane.

In the present invention, the controller is preferably configured to set the route evaluation parameter value to be higher in the case where the lateral acceleration, which is generated at the time when the vehicle travels on the travel route candidate, is equal to or higher than a specified threshold which is higher than the target lateral acceleration than in the case where the lateral acceleration is lower than the threshold.

According to the present invention that is configured just as described, the high route evaluation parameter value is applied to the travel route where the relatively high lateral acceleration is generated. Thus, it is possible to appropriately suppress setting of such a travel route.

In the present invention, the controller preferably sets plural sampling points on the route of each of the plural travel route candidates, and sets the route evaluation parameter value at each of the plural sampling points set for each of the plural travel route candidates on the basis of the lateral acceleration.

According to the present invention that is configured just as described, the route evaluation parameter value is calculated at each of the plural sampling points set for each of the travel route candidates. Thus, it is possible to accurately evaluate each of the plural travel route candidates.

In another aspect, in order to achieve the above purpose, the present invention is a vehicle driving assistance method executed by a controller including a computer, and includes: a step of setting plural travel route candidates as candidates for setting a target travel route for a vehicle in a travel road on the basis of travel road information on the travel road of the vehicle; a step of calculating a route evaluation parameter value for each of the plural travel route candidates; a step of selecting one travel route of the plural travel route candidates as the target travel route on the basis of the route evaluation parameter value; and a step of executing driving control of the vehicle such that the vehicle travels along the target travel route. In the step of calculating the route evaluation parameter value, the method further includes: calculating target lateral acceleration that should be generated by the vehicle according to curvature of the travel road; and setting the route evaluation parameter value to be lower in the case where lateral acceleration, which is generated at the time when the vehicle travels on the travel route candidate, is the target lateral acceleration than in the case where the lateral acceleration is not the target lateral acceleration.

Also, according to the present invention that is configured just as described, it is possible to appropriately set such a travel route that the target lateral acceleration corresponding to the curvature of the travel road is generated.

### [Advantage of the invention]

According to the vehicle driving assistance system and the vehicle driving assistance method of the present invention, it is possible for a vehicle to maintain a desired position. In particular, a lateral acceleration corresponding to the curvature of the travel road is generated by appropriately defining a route evaluation parameter.

### [Brief Description of the Drawings]

[Fig. 1] Fig. 1 is a block diagram illustrating a schematic configuration of a vehicle driving assistance system according to an embodiment of the present invention.
[Fig. 2] Fig. 2 is an explanatory view of a basic concept of driving assistance according to the embodiment of the present invention.
[Fig. 3] Fig. 3 is an explanatory view of a precondition for defining a route evaluation parameter according to the embodiment of the present invention.
[Fig. 4] Fig. 4 is a map defining the route evaluation parameter according to the embodiment of the present invention.
[Fig. 5] Fig. 5 is a flowchart of driving assistance processing according to the embodiment of the present invention.

### [Modes for Carrying Out the Invention]

A description will hereinafter be made on a vehicle driving assistance system and a vehicle driving assistance method according to an embodiment of the present invention with reference to the accompanying drawings.

### [System Configuration]

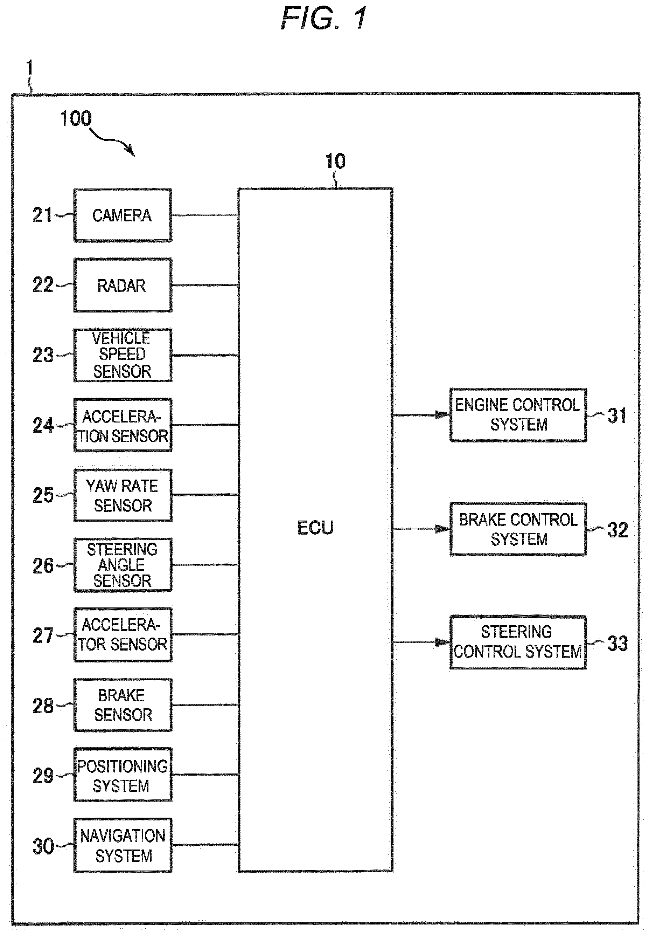

A description will firstly be made on a configuration of the vehicle driving assistance system according to the embodiment of the present invention with reference to Fig. 1. Fig. 1 is a block diagram illustrating a schematic configuration of the vehicle driving assistance system according to the embodiment of the present invention.

A vehicle driving assistance system 100 is configured to execute driving assistance control (automated driving control) for setting a target travel route for a vehicle 1 and causing the vehicle 1 to travel along this target travel route. As illustrated in Fig. 1, the vehicle driving assistance system 100 includes an electronic control unit (ECU) 10 as a vehicle controller or a controller, plural types of sensors, and plural control systems.

More specifically, the plural types of the sensors are or comprise a camera 21, a radar 22, a vehicle speed sensor 23 for detecting behavior of the vehicle 1 and a driving operation by an occupant, an acceleration sensor 24, a yaw rate sensor 25, a steering angle sensor 26, an accelerator sensor 27, and a brake sensor 28. Furthermore, the plural types of the sensors are or comprise a positioning system 29 for detecting a position of the vehicle 1 and a navigation system 30. The plural control systems are or comprise an engine control system 31, a brake control system 32, and a steering control system 33.

Moreover, other types of the sensors may be a peripheral sonar system for measuring a distance from and a position of a structure around the vehicle 1, a corner radar provided at each of four corners of the vehicle 1 to measure approach of the peripheral structure, and an inner camera for capturing an image of the inside of a vehicle cabin in the vehicle 1.

The ECU 10 executes various calculations on the basis of signals received from the plural types of the sensors, and sends control signals to the engine control system 31, the brake control system 32, and the steering control system 33 so as to appropriately actuate an engine system, a brake system, and a steering system, respectively. The ECU 10 is constructed of a computer that includes one or more processors (typically CPUs), memory (ROM, RAM, or the like) for storing various programs, an input/output device, and the like. The ECU 10 corresponds to an example of the "controller" in the present invention.

The camera 21 captures an image around the vehicle 1, and outputs image data. Based on the image data received from the camera 21, the ECU 10 identifies objects (for example, a preceding vehicle, a parked vehicle, a pedestrian, a travel road, road marking lines (a lane divider, a white line, and a yellow line), a traffic signal, a traffic sign, a stop line, an intersection, an obstacle, and the like) . The ECU 10 may acquire information on the object from the outside through a traffic infrastructure, inter-vehicle communication, or the like. In this way, a type, a relative position, a moving direction, and the like of the object are identified.

The radar 22 measures a position and a speed of the object (particularly, the preceding vehicle, the parked vehicle, the pedestrian, a dropped object on a travel road 5, or the like). For example, a millimeter-wave radar can be used as the radar 22. The radar 22 transmits a radio wave in an advancing direction of the vehicle 1, and receives a reflected wave that is generated when the object reflects the transmitted wave. Then, based on the transmitted wave and the received wave, the radar 22 measures a distance between the vehicle 1 and the object (for example, an inter-vehicular distance) and a relative speed of the object to the vehicle 1. In this embodiment, instead of the radar 22, a laser radar, an ultrasonic sensor, or the like may be used to measure the distance from the object and the relative speed of the object. Alternatively, plural types of sensors may be used to constitute a position and speed measuring device.

The camera 21 and the radar 22 correspond to an example of the "travel road information acquisition device" in the present invention.

The vehicle speed sensor 23 detects an absolute speed of the vehicle 1. The acceleration sensor 24 detects acceleration of the vehicle 1. This acceleration includes acceleration in a longitudinal direction and acceleration in a lateral direction (that is, lateral acceleration). In the present specification, the acceleration includes not only a change rate of the speed in a speed increasing direction but also a change rate of the speed in a speed reducing direction (that is, deceleration).

The yaw rate sensor 25 detects a yaw rate of the vehicle 1. The steering angle sensor 26 detects a rotation angle (a steering angle) of a steering wheel of the vehicle 1. The ECU 10 executes a specified calculation on the basis of the absolute speed detected by the vehicle speed sensor 23 and the steering angle detected by the steering angle sensor 26, and can thereby acquire a yaw angle of the vehicle 1 (that is, an angle defined by the longitudinal direction of the vehicle 1 with respect to an x-axis, which will be described later). The accelerator sensor 27 detects a depression amount of an accelerator pedal. The brake sensor 28 detects a depression amount of a brake pedal.

The positioning system 29 is a GPS system and/or a gyroscopic system, and detects the position (current vehicle position information) of the vehicle 1. The navigation system 30 stores map information therein, and can provide the map information to the ECU 10. Based on the map information and the current vehicle position information, the ECU 10 identifies a road, the intersection, the traffic signal, a building, and the like existing around (particularly, in the advancing direction of) the vehicle 1. The map information may be stored in the ECU 10. The navigation system 30 also corresponds to an example of the "travel road information acquisition device" in the present invention.

The engine control system 31 controls an engine of the vehicle 1. The engine control system 31 is a component capable of regulating engine output (drive power) and, for example, includes an ignition plug, a fuel injection valve, a throttle valve, a variable valve mechanism that changes opening/closing timing of intake/exhaust valves, and the like. When the vehicle 1 has to be accelerated or decelerated, the ECU 10 sends the control signal to the engine control system 31 so as to change the engine output.

The brake control system 32 controls a brake system of the vehicle 1. The brake control system 32 is a component capable of regulating a braking force of the brake system and, for example, includes a hydraulic pump, a valve unit, and the like. When the vehicle 1 has to be decelerated, the ECU 10 sends the control signal to the brake control system 32 so as to generate the braking force.

The steering control system 33 controls a steering device of the vehicle 1. The steering control system 33 is a component capable of regulating the steering angle of the vehicle 1 and, for example, includes an electric motor for an electric power steering system, and the like. When the advancing direction of the vehicle 1 has to be changed, the ECU 10 sends the control signal to the steering control system 33 so as to change a steering direction.

### [Basic Concept of Driving Assistance]

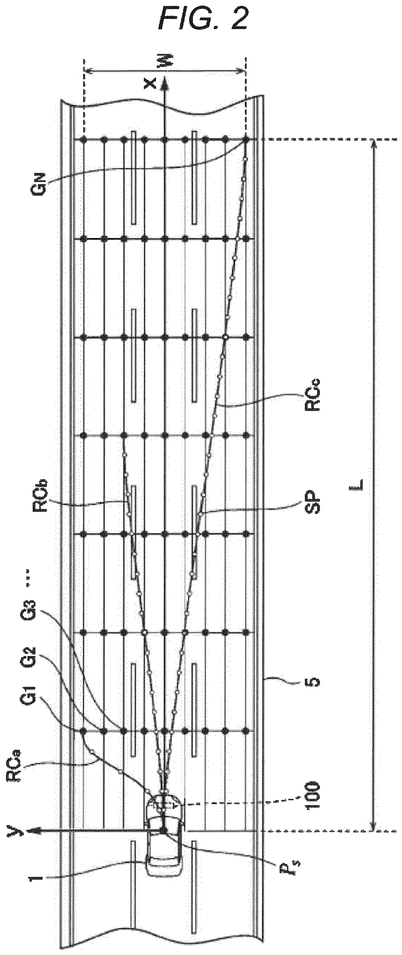

Next, a description will be made on a basic concept of driving assistance that is executed by the above-described ECU 10 in the embodiment of the present invention with reference to Fig. 2. Fig. 2 illustrates a situation where the vehicle 1 travels on the travel road 5.

First, the ECU 10 executes the calculation to identify the position of the vehicle 1 on the travel road 5 on the basis of travel road information. The travel road information is information on the travel road 5 where the vehicle 1 travels, and is acquired by the camera 21, the radar 22, the navigation system 30, and the like. For example, the travel road information includes information on a shape of the travel road (a straight road, a curved road, curvature of the curved road), a travel road width, the number of lanes, a lane width, and the like.

Next, the ECU 10 executes the calculation based on the travel road information, so as to set plural virtual grid points Gₙ (n = 1, 2,...N) on the travel road 5 existing ahead in the advancing direction of the vehicle 1. In the case where an extending direction of the travel road 5 is defined as an x-direction and a width direction of the travel road 5 is defined as a y-direction, the grid points Gₙ are arranged in a lattice shape along the x-direction and the y-direction. An origin of x-y coordinates is set to a point corresponding to the position of the vehicle 1.

An area where the ECU 10 sets the grid points Gₙ is stretched in front of the vehicle 1 for a distance L along the travel road 5. The distance L is calculated on the basis of the speed of the vehicle 1 at the time of the calculation. In this embodiment, the distance L is a distance for which the vehicle 1 is expected to travel at a speed (V) during the calculation for a specified fixed time t (for example, three seconds) (L = V × t). However, the distance L may be a specified fixed distance (for example, 100 m) or a function of the speed (and the acceleration). In addition, a width W of the area where the grid points Gₙ are set is set to a substantially equal value to a width of the travel road 5. When the plural grid points Gₙ are set, just as described, the position of the vehicle 1 on the travel road 5 can be identified.

Here, the travel road 5 illustrated in Fig. 2 is a straight section, and thus the grid points Gₙ are arranged in a rectangular shape. The grid points Gₙ are arranged along the extending direction of the travel road. Thus, in the case where the travel road includes a curved section, the grid points Gₙ are arranged along curvature of the curved section.

Next, based on the travel road information, the ECU 10 executes a calculation to set a travel route candidate RC (that is, a candidate that possibly becomes the target travel route where the vehicle 1 actually travels). More specifically, the ECU 10 sets the plural travel route candidates RC by a route search using the state lattice method. In the state lattice method, the plural travel route candidates RC are set from the position of the vehicle 1 in a manner to be branched toward the grid points Gₙ existing in the advancing direction of the vehicle 1. In Fig. 2, travel route candidates RCₐ, RC_{b}, and RC_{c} are illustrated as some of the plural travel route candidates RC set by the ECU 10.

The ECU 10 may set the travel route candidates RC on the basis of obstacle information in addition to the travel road information. This obstacle information is information on presence or absence of the obstacle (for example, the preceding vehicle, the parked vehicle, the pedestrian, the dropped object, or the like) on the travel road 5 in the advancing direction of the vehicle 1, a moving direction thereof, a moving speed thereof, and the like, and is acquired by the camera 21 and the radar 22.

Next, as illustrated in Fig. 2, the ECU 10 sets plural sampling points SP along each of the travel route candidates RC, and calculates a route evaluation parameter value at each of the sampling points SP. Each of these sampling points SP is a discrete point (position), which is provided on the route of each of the travel route candidates RC and at which the route evaluation parameter value is calculated. More specifically, for each of the plural travel route candidates RC, the ECU 10 calculates the route evaluation parameter value at each of the plural sampling points SP.

Next, based on the thus-calculated route evaluation parameter value of each of the plural travel route candidates RC, the ECU 10 selects the route with the minimum route evaluation parameter value from the plural travel route candidates RC, and sets such a route as the target travel route. Then, the ECU 10 sends the control signal to at least one of the engine control system 31, the brake control system 32, and the steering control system 33 such that the vehicle 1 travels along the set target travel route.

### [Calculation of Route Evaluation Parameter Value]

Next, a description will be made on the route evaluation parameter according to the embodiment of the present invention. Generally, the route evaluation parameter is defined according to plural factors such as the speed, the acceleration in the longitudinal direction, the acceleration in the lateral direction (the lateral acceleration), a route change rate, and/or the obstacle. The route evaluation parameter may specifically be a parameter whose value is indicative of the suitability of a route, e.g. for achieving a given objective such as time efficiency, security, cost efficiency etc. Exemplarily, the suitability of the route may be inversely proportional to the value of the route evaluation parameter, so that the most suitable route minimizes the value of the route evaluation parameter. This embodiment is characterized by the route evaluation parameter that is defined according to the lateral acceleration as one of plural types of such route evaluation parameters. A specific description will hereinafter be made on the route evaluation parameter corresponding to the lateral acceleration.

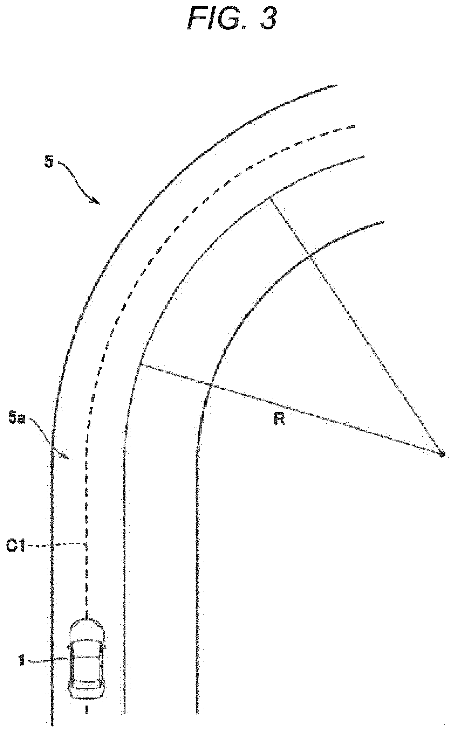

Fig. 3 is an explanatory view of a precondition for defining the route evaluation parameter according to the embodiment of the present invention. Fig. 3 illustrates a situation where the vehicle 1 travels on the curved travel road 5 (that is, the curved road or a corner road). In Fig. 3, the reference sign "5a" indicates a host vehicle lane in which the vehicle (the host vehicle) 1 travels in the travel road 5, and the reference sign "C1" indicates a center line corresponding to a center position of the host vehicle lane 5a. In addition, the reference sign "R" indicates a curvature radius of the travel road 5 (the host vehicle lane 5a). When this curvature radius R is used, curvature of the travel road 5 is "1/R".

In this embodiment, the ECU 10 calculates target lateral acceleration that should be generated by the vehicle 1 according to the curvature (1/R) of the travel road 5, and defines the route evaluation parameter corresponding to the lateral acceleration on the basis of this target lateral acceleration. More specifically, based on the curvature (1/R) of the travel road 5, the ECU 10 calculates the lateral acceleration, which is generated when the vehicle 1 travels on the center line C1 of the host vehicle lane 5a as a target position in the travel road 5, as the target lateral acceleration. In this case, in order to make the vehicle 1 travel on the center line C1, the ECU 10 applies specified conditions related to the vehicle speed and the acceleration (a condition of maintaining the constant vehicle speed, a condition of decelerating at a specified change rate, and the like) and uses a specified model, a calculation formula, or the like to calculate the target lateral acceleration. In general, as the curvature (1/R) of the travel road 5 is increased, the target lateral acceleration is increased. As the curvature (1/R) of the travel road 5 is reduced, the target lateral acceleration is reduced.

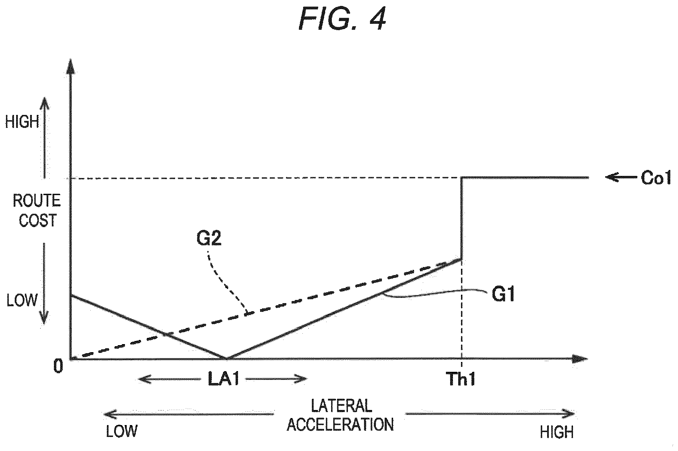

Next, Fig. 4 is a map defining the route evaluation parameter (also referred to as "route cost") according to the embodiment of the present invention. In Fig. 4, a horizontal axis represents the lateral acceleration, and a vertical axis represents the evaluation parameter or route cost. In addition, a graph G1 indicated by a solid line represents a map of the route evaluation parameter that is applied in this embodiment, and a graph G2 indicated by a broken line represents a map of the route evaluation parameter that is applied in a comparative example. The ECU 10 refers to the map as illustrated in Fig. 4 so as to determine the route evaluation parameter value, which corresponds to the lateral acceleration to be generated at the sampling point SP (hereinafter appropriately referred to as "estimated lateral acceleration"), at the sampling point SP, for which the route evaluation parameter value should be calculated, on the travel route candidate RC.

In this embodiment, as indicated by the graph G1, in an area where the estimated lateral acceleration is lower than a threshold Th1 (> target lateral acceleration LA1), in the case where the estimated lateral acceleration is equal to the target lateral acceleration LA1, the route evaluation parameter value is set to be lower than the case where the estimated lateral acceleration is not equal to the target lateral acceleration LA1. That is, in the case where the estimated lateral acceleration is equal to the target lateral acceleration LA1, the route evaluation parameter value is set to a minimum value (= 0). In particular, in this embodiment, as a difference between the estimated lateral acceleration and the target lateral acceleration LA1 is increased, in other words, as the estimated lateral acceleration deviates from the target lateral acceleration LA1, the route evaluation parameter value is set to a higher value. In addition, in both the case where the estimated lateral acceleration is lower than the target lateral acceleration LA1 and the case where the estimated lateral acceleration is higher than the target lateral acceleration LA1, a change rate (a gradient) of the route evaluation parameter value with respect to the difference between the estimated lateral acceleration and the target lateral acceleration LA1 is set to the same absolute value. Also, in the case where the target lateral acceleration LA1 is changed to have various values, the same change rate (gradient) of the route evaluation parameter value is applied. That is, regardless of a magnitude of the target lateral acceleration LA1, the change rate (gradient) of the route evaluation parameter value is set to be constant. Such a change rate (gradient) of the route evaluation parameter value is defined in advance by adaptation or the like.

Meanwhile, in the comparative example, as indicated by the graph G2, as the estimated lateral acceleration is increased, the route evaluation parameter value is set to be higher. According to this comparative example, the travel route where the estimated lateral acceleration is low is preferentially set. Thus, it is impossible to appropriately set such a travel route that the vehicle 1 travels at the position (such as the center line C1 of the host vehicle lane 5a, or the like), at which the vehicle 1 should travel, in the travel road 5. On the contrary, in this embodiment, as described above, the target lateral acceleration LA1 is calculated according to the curvature (1/R) of the travel road 5 such that the vehicle 1 travels on the center line C1, and the route evaluation parameter value at this target lateral acceleration LA1 is set to the minimum value (see the graph G1). In this way, it is possible to appropriately set such a travel route that the target lateral acceleration LA1 is generated at the time when the vehicle 1 travels on the travel road 5, that is, such a travel route that the vehicle 1 travels on the center line C1.

Furthermore, in this embodiment, as indicated by the graph G1, in the case where the estimated lateral acceleration is equal to or higher than the threshold Th1 (> the target lateral acceleration LA1), the route evaluation parameter value is set to be higher than the case where the estimated lateral acceleration is lower than the threshold Th1. More specifically, when the estimated lateral acceleration becomes equal to or higher than the threshold Th1, the route evaluation parameter value is increased stepwise to a specified value Co1 (a relatively high value as the route evaluation parameter value). The threshold Th1 is defined on the basis of the lateral acceleration that can be accepted by a driver of the vehicle 1. For example, such a value (in one example, 0.6 G) that gives the driver a sense of discomfort at the time when the lateral acceleration exceeds this value is applied as the threshold Th1. The route evaluation parameter value is increased stepwise by using such a threshold Th1. In this way, the high route evaluation parameter value is applied to the travel route where the relatively high lateral acceleration is generated, which hinders setting of such a travel route.

Note that, since the target lateral acceleration LA1 is changed according to the curvature (1/R) of the travel road 5 (see arrows in Fig. 4), a shape of the graph G1 (a shape of a portion in which the estimated lateral acceleration is lower than the threshold Th1) is changed in response to the change in this target lateral acceleration LA1. That is, in this embodiment, every time the vehicle 1 travels on the curved travel road 5, the target lateral acceleration LA1 is calculated on the basis of the curvature of this travel road 5, and the map of the route evaluation parameter corresponding to this target lateral acceleration LA1 is set. Thus, the map of the route evaluation parameter corresponding to the lateral acceleration is not fixed but is changed accordingly.

### [Driving Assistance Processing]

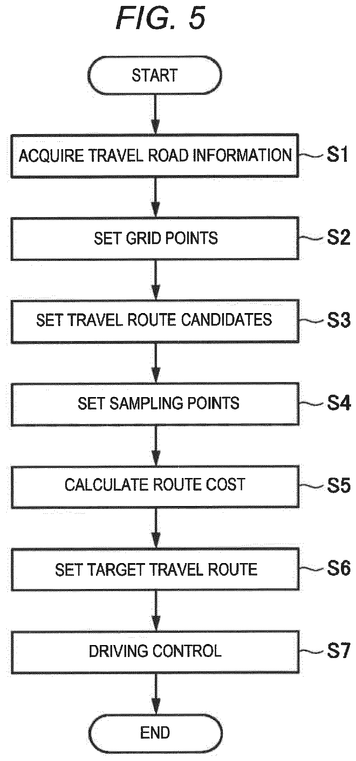

Next, Fig. 5 is a flowchart of driving assistance processing according to the embodiment of the present invention. This processing is repeatedly executed in specified cycles (for example, every 0.05 to 0.2 seconds) by the ECU 10.

First, in step S1, the ECU 10 acquires the travel road information from the camera 21, the radar 22, and the navigation system 30.

Next, in step S2, the ECU 10 identifies the shape of the travel road 5 (for example, the extending direction of the travel road 5, the width of the travel road 5, and the like) on the basis of the travel road information, and sets the plural grid points Gₙ (n = 1, 2,...N) on the travel road 5. For example, the ECU 10 sets the grid point Gₙ at every 10 m in the x-direction and at every 0.875 m in the y-direction.

Next, in step S3, the ECU 10 sets the plural travel route candidates RC by the route search using the state lattice method on the basis of the travel road information. More specifically, the ECU 10 sets the plural travel route candidates RC in the manner to be branched from the position of the vehicle 1 toward the grid points Gₙ existing in the advancing direction of the vehicle 1. The ECU 10 may set the travel route candidates RC on the basis of the obstacle information in addition to the travel road information.

Next, in step S4, the ECU 10 sets the plural sampling points SP along each of the travel route candidates RC. For example, on each route of the travel route candidates RC, the ECU 10 sets the sampling points SP at equally-spaced intervals (every 0.2 m in an example) in the x-direction.

Next, in step S5, the ECU 10 calculates the route evaluation parameter value of each of the plural travel route candidates RC. More specifically, for each of the plural travel route candidates RC, the ECU 10 calculates the route evaluation parameter value at each of the plural sampling points SP. Then, the ECU 10 calculates the route evaluation parameter value, which is applied to the travel route candidate RC, from the plural route evaluation parameter values that are calculated at the plural sampling points SP in the single travel route candidate RC. For example, the ECU 10 sets an average value of the plural route evaluation parameter values at the plural sampling points SP as the route evaluation parameter value of the single travel route candidate RC. In this way, the ECU 10 calculates the route evaluation parameter value of all of the plural travel route candidates RC.

In some examples, when calculating the route evaluation parameter value at each of the sampling points SP, the ECU 10 calculates the plural types of the route evaluation parameter value, such as the route evaluation parameter value that is defined according to the speed, the route evaluation parameter value that is defined according to the acceleration in the longitudinal direction, the route evaluation parameter value that is defined according to the lateral acceleration, the route evaluation parameter value that is defined according to the route change rate, and the route evaluation parameter value that is defined according to the obstacle. Then, the ECU 10 calculate the route evaluation parameter value, which is finally applied at each of the sampling points SP, by weighing each of the thus-acquired plural types of the route evaluation parameter value, for example. In other examples, only the route evaluation parameter that is defined according to the lateral acceleration is used.

In particular, in this embodiment, in the case where the ECU 10 calculates the route evaluation parameter value on the basis of the lateral acceleration, the ECU 10 refers to the map illustrated in Fig. 4 to calculate the route evaluation parameter value. First, based on the curvature (1/R) of the travel road 5, which is included in the acquired travel road information, the ECU 10 calculates the lateral acceleration, which is generated when the vehicle 1 travels on the center line C1 of the host vehicle lane 5a, as the target lateral acceleration LA1. In this case, in order to make the vehicle 1 travel on the center line C1, the ECU 10 applies the specified conditions related to the vehicle speed and the acceleration (the condition of maintaining the constant vehicle speed, the condition of decelerating at the specified change rate, and the like) and uses the specified model, the calculation formula, or the like to calculate the target lateral acceleration LA1. Then, the ECU 10 creates the map of the route evaluation parameter value in which the route evaluation parameter value has the minimum evaluation parameter value at this target lateral acceleration LA1 (see the graph G1 in Fig. 4). Meanwhile, in regard to the sampling point SP as the target, for which the route evaluation parameter value is calculated, the ECU 10 uses the specified model, the calculation formula, or the like to calculate the lateral acceleration (the estimated lateral acceleration) that is generated at the time when the vehicle 1 passes the sampling point SP. Then, based on the map of the route evaluation parameter value that is created as described above, the ECU 10 sets the route evaluation parameter value corresponding to the estimated lateral acceleration at this sampling point SP.

Next, in step S6, the ECU 10 sets the target travel route. More specifically, the ECU 10 selects one route with the minimum route evaluation parameter value from the plural travel route candidates RC on the basis of the route evaluation parameter value of each of the plural travel route candidates RC calculated as described above, and sets such a route as the target travel route.

Next, in step S7, the ECU 10 executes driving control (vehicle behavior control) including speed control and/or steering control of the vehicle 1 such that the vehicle 1 travels along the target travel route. More specifically, the ECU 10 sends the control signal to at least one of the engine control system 31, the brake control system 32, and the steering control system 33 and executes at least one of the engine control, braking control, and the steering control.

### [Operation and Effects]

Next, a description will be made on an operation and effects according to the embodiment of the present invention.

In this embodiment, in the vehicle driving assistance system 100 that sets the plural travel route candidates RC on the basis of the travel road information acquired from the camera 21 and the like, calculates the route evaluation parameter value for each of these plural travel route candidates RC, and sets the target travel route from the plural travel route candidates RC on the basis of this route evaluation parameter value, the ECU 10 calculates the target lateral acceleration LA1 that should be generated by the vehicle 1 according to the curvature (1/R) of the travel road 5. Then, in the case where the lateral acceleration (the estimated lateral acceleration) that is generated at the time when the vehicle 1 travels on the travel route candidate RC is the target lateral acceleration LA1, the ECU 10 sets the lower route evaluation parameter value than the case where the estimated lateral acceleration is not the target lateral acceleration LA1. According to this embodiment, just as described, the route evaluation parameter value is set to the minimum value at the target lateral acceleration LA1. Thus, it is possible to appropriately set such a travel route that the target lateral acceleration corresponding to this curvature (1/R) of the travel road 5 is generated at the time when the vehicle 1 travels on the travel road 5.

According to this embodiment, since the ECU 10 sets the route evaluation parameter value to the higher value as the difference between the estimated lateral acceleration and the target lateral acceleration LA1 is increased, it is possible to further effectively set such a travel route that the target lateral acceleration LA1 is generated.

According to this embodiment, the ECU 10 calculates the lateral acceleration, which is generated at the time when the vehicle 1 travels on the center line C1 of the host vehicle lane 5a, as the target lateral acceleration LA1 on the basis of the curvature (1/R) of the travel road 5. Thus, by using the route evaluation parameter value that is defined according to this target lateral acceleration LA1, it is possible to appropriately set such a travel route that the vehicle 1 travels on the center line C1.

According to this embodiment, in the case where the estimated lateral acceleration is equal to or higher than the threshold Th1, the ECU 10 sets the route evaluation parameter value to be higher than that in the case where the estimated lateral acceleration is lower than the threshold Th1. In this way, the high route evaluation parameter value is applied to the travel route where the relatively high lateral acceleration is generated. Thus, it is possible to appropriately suppress such a travel route from being set.

### [Modified Examples]

In the above-described embodiment, the center line C1 of the host vehicle lane 5a is used as the target position in the travel road 5, at which the vehicle should travel. However, in another example, a specified position that is offset from the center line C1 of the host vehicle lane 5a may be applied as the target position. For example, the target position in the travel road 5 may be set such that the vehicle 1 travels on a travel route of so-called out-in-out when traveling at a corner.

In the above-described embodiment, an example in which the present invention is applied to the vehicle 1 having the engine as a drive source has been described (see Fig. 1). However, the present invention can also be applied to a vehicle having an electric motor as the drive source (an electric vehicle or a hybrid vehicle). In addition, in the above-described embodiment, the braking force is applied to the vehicle 1 by the brake system (the brake control system 32). However, in another example, the braking force may be applied to the vehicle by regeneration of the electric motor.

### [Description of Reference Signs and Numerals]

- 1:: Vehicle
- 5:: Travel road
- 5a:: Host vehicle lane
- 10:: ECU
- 21:: Camera
- 22:: Radar
- 30:: Navigation System
- 100:: Vehicle driving assistance system
- C1:: Center line
- Gₙ:: Grid point
- RC:: Route candidate
- SP:: Sampling point

## Claims

1. A vehicle driving assistance system (100) comprising:
a travel road information acquisition device that acquires travel road information on a travel road (5) of a vehicle (1); and
a controller (10) configured to set a target travel route for the vehicle (1) in the travel road (5) on the basis of the travel road information and to execute driving control of the vehicle (1) such that the vehicle (1) travels along the target travel route, wherein
the controller (10) is configured to:
set plural travel route candidates (RC) as candidates for setting the target travel route on the basis of the travel road information;
calculate a route evaluation parameter value for each of the plural travel route candidates (RC); and
select one travel route of the plural travel route candidates (RC) as the target travel route on the basis of the route evaluation parameter value, and
the controller (10) is further configured to:
calculate target lateral acceleration that should be generated by the vehicle according to curvature of the travel road (5); and
set the route evaluation parameter value to be lower in the case where lateral acceleration that is generated at the time when the vehicle (1) travels on the travel route candidate is the target lateral acceleration than in the case where the lateral acceleration is not the target lateral acceleration.

2. The vehicle driving assistance system (100) according to claim 1, wherein
the controller (10) is configured to set the route evaluation parameter value to be a value that is increased as a difference between the lateral acceleration that is generated at the time when the vehicle (1) travels on the travel route candidate and the target lateral acceleration is increased in the case where the lateral acceleration is not the target lateral acceleration.

3. The vehicle driving assistance system (100) according to claim 1 or 2, wherein
the controller (10) is configured to calculate lateral acceleration, which is generated at the time when the vehicle (1) travels at a target position in the travel road, as the target lateral acceleration on the basis of the curvature of the travel road (5).

4. The vehicle driving assistance system (100) according to claim 3, wherein
the controller (10) is configured to set the target position at a center line of a host vehicle lane, in which the vehicle travels, of the travel road.

5. The vehicle driving assistance system (100) according to any one of the preceding claims, wherein
the controller (10) is configured to set the route evaluation parameter value to higher in the case where the lateral acceleration, which is generated at the time when the vehicle (1) travels on the travel route candidate, is equal to or higher than a specified threshold which is higher than the target lateral acceleration than in the case where the lateral acceleration is lower than the threshold.

6. The vehicle driving assistance system (100) according to any one of the preceding claims, wherein
the controller (10) is configured to set plural sampling points (SP) on the route of each of the plural travel route candidates (RC), and to set the route evaluation parameter value at each of the sampling points (SP) set for each of the plural travel route candidates (RC) on the basis of the lateral acceleration.

7. A vehicle driving assistance method executed by a controller (10) including a computer, the vehicle driving assistance method comprising:
a step of setting plural travel route candidates (RC) as candidates for setting a target travel route for a vehicle (1) in a travel road (5) on the basis of travel road information on the travel road (5) of the vehicle (1);
a step of calculating a route evaluation parameter value for each of the plural travel route candidates (RC);
a step of selecting one travel route of the plural travel route candidates (RC) as the target travel route on the basis of the route evaluation parameter value; and
a step of executing driving control of the vehicle (1) such that the vehicle (1) travels along the target travel route, and
in the step of calculating the route evaluation parameter value, the method further comprising:
calculating target lateral acceleration that should be generated by the vehicle (1) according to curvature of the travel road (5); and
setting the route evaluation parameter value to be lower in the case where lateral acceleration, which is generated at the time when the vehicle (1) travels on the travel route candidate, is the target lateral acceleration than in the case where the lateral acceleration is not the target lateral acceleration.

8. The vehicle driving assistance method according to claim 7 further comprising
setting the route evaluation parameter value to be a value that is increased as a difference between the lateral acceleration that is generated at the time when the vehicle (1) travels on the travel route candidate and the target lateral acceleration is increased in the case where the lateral acceleration is not the target lateral acceleration.

9. The vehicle driving assistance method according to claim 7 or 8, further comprising
calculating lateral acceleration, which is generated at the time when the vehicle (1) travels at a target position in the travel road, as the target lateral acceleration on the basis of the curvature of the travel road (5).

10. The vehicle driving assistance method according to claim 9, further comprising
setting the target position at a center line of a host vehicle lane, in which the vehicle travels, of the travel road.

11. The vehicle driving assistance method according to any one of claims 7 to 10, further comprising
setting the route evaluation parameter value to higher in the case where the lateral acceleration, which is generated at the time when the vehicle (1) travels on the travel route candidate, is equal to or higher than a specified threshold which is higher than the target lateral acceleration than in the case where the lateral acceleration is lower than the threshold.

12. The vehicle driving assistance method according to any one of claims 7 to 11, further comprising
setting plural sampling points (SP) on the route of each of the plural travel route candidates (RC), and setting the route evaluation parameter value at each of the sampling points (SP) set for each of the plural travel route candidates (RC) on the basis of the lateral acceleration.

13. A computer program product comprising computer-readable instructions, which, when executed by a computer, cause the computer to carry out the method of any one of claims 7 to 12.
